# EUROPEAN PATENT SPECIFICATION

(11) **EP 0 302 454 B1**
(45) Date of publication and mention of the grant of the patent: **06.12.1995**
(21) Application number: 88112567.8
(22) Date of filing: 02.08.1988
(51) Int. Cl.: G06T 5/00, G06T 11/40

(54) **System and method for color image enhancement**
Einrichtung und Verfahren zur Farbbildverbesserung
Dispositif et méthode pour améliorer des images couleur

(30) Priority: 03.08.1987 US 81116
(43) Date of publication of application: 08.02.1989
(73) Proprietor: AMERICAN FILM TECHNOLOGIES, INC., San Diego California 92121 (US)
(72) Inventor: Sandrew, Barry, Escondido California 92025 (US)
(74) Representative: Schwabe - Sandmair - Marx

(56) References cited:
- US-A- 4 189 743
- JOURNAL OF THE SOCIETY OF MOTION PICTURE AND TELEVISION vol. 93, no. 7, July 1984, SCARSDALE US pages 632-635; Wilson Markle: "The Development and Application of Colorization"
- IEEE 8th. Annual Conf. of the Engineering in Medicine and Biology Society vol.3, 07 November 1986, Worthington Hotel, Fort Worth, Texas pages 1900-1905; Gary R. McNeal: "Design of a Pseudocolor Generator"
- IBM JOURNAL OF RESEARCH AND DEVELOPMENT. vol. 27, no. 4, July 1983, NEW YORK USpages 356-366; Edward J. Farrell: "Color Display and Interactive Interpretation of Three-Dimensional Data"

## Description

The present invention relates to a method of color enhancing an image and also to a system for carrying through this method.

### Background of the Invention

In strictly mathematical terms, the image produced on black and white film is one dimensional (brightness), while an original scene can be viewed as three dimensional (using the HLS model of color, where hue, luminance, and saturation are the dimensions). The chemical reaction of the film emulsion, and the camera mechanisms and filters, essentially reduce the three dimensional information to one dimension by complex mapping, and forever obliterate the original hue, luminance, and saturation information.

Note: It should be pointed out that luminance and brightness are not the same. Since brightness of the black and white image results from the complex interactions of the three elements of the HLS system; there is only a statistical correlation between brightness and luminance, but they are not identical.

### Color Representation Systems

Color is both an absolute quality of light (its wavelength or frequency) and a relative quality which depends on the human perceiver. For this reasons, various color "gamuts" have been proposed which allow Perceived colors to be quantified. Among these models is the CIE chromaticity scale, which permits quantification of color by combinations of so-called primaries (which are, by themselves, not visible to human observers). (See Foley & VanDam, Fundamentals of Interactive Computer Graphics, Addison Wesley, Reading, MA 1984 pp. 606-608.) In Addition to theoretical models of color (CIE Chromaticity, Hue-Luminance-Saturation, and Red-Green-Blue), there are many representational systems for color reproduction in various media such as the RGB system for cathode ray tubes, the process color system for printing, and the NTSC, PAL, and SECAM systems for broadcast video. Each of these models is, in fact, a relatively small subset of both the theoretical absolute range of colors and of the actual range of humanly perceivable colors.

One of the theoretical models (Ostwald, W., Colour Science, Winsor & Winson, London, 1931) which is especially useful for analysis of color is the HLS model of hue, luminance, and saturation. This model uses a three dimensional cylindrical universe (the absolute theoretical color space), inside of which is a space bounded by a pair of cones having a common base (the perception space). The cylinder's axis (from apex to apex of the cones) is the luminance axis, with the lower apex having a luminance of zero (all black) and the apex of the upper cone having aluminance of 1 (all white). Distance from the luminance axis (normal to the axis) determines saturation (proportion of a color which is made up of its complementary color), with the axis representing zero saturation (equal amounts of the primary color and its complement and therefore no color) and the surface of the cone representing maximum perceived saturation for a given luminance. Finally, angular displacement around the luminance axis represents hue, as with a conventional color wheel, with complements separated by 180 degrees.

The solid space defined by the HLS conic model is pointed at its top and bottom to represent the fact that as colors become whiter or blacker, they are **perceived** to lose hue. Saturation is a characteristic which depends chiefly on the narrowness or purity of the band of wavelength comprising a color. At the exact center of the space is a medium gray which exhibits a moderate emittance or reflectance for all wavelengths of light.

The RGB system ist used, for example, in CRT displays, where each of the three electron guns (red, green, and blue) is controlled directly by a signal indicating its respective intensity. HLS color may be converted to the RGB representation (see Foley & VanDam, pp. 648-9.), however there are many HLS combinations which must be "clipped" to be represented in RGB. The same is true of NTSC video (also known as YIQ), which has an even more restricted range than RGB. Thus, not every "real world" color can be reproduced by video systems using either RGB or NTSC standards. According to Foley and VanDam, "neither the V in HSV [Hue, Saturation, Value] nor the L in HLS correspond to luminance in the YIQ model, so two different colors defined in either space can easily have the same luminance, and be indistinguishable on black and white TV or videotape." (Foley and VanDam p. 618).

Since approximately 1970, several techniques have been developed for the addition of color to monochrome images. Often, these techniques rely on video technology to augment the video signal in a defined manner, typically by adding a chrominance component signal to the pre-existing luminance signal. This technique results in an appearance not unlike that achieved by Thomas Edison in his early efforts to add tint to black and white film by painting the frames: a colored area over a black and white picture. Because of their reliance on video technology, all of these systems suffer from lack of vividness of colors, and from an inability to accurately reproduce colors.

From the document "Journal of the Society of Motion Picture and Television" Vol. 93, No. 7, Juli 1984, SCARSDALE US, pages 632-635; Wilson Markle: "The Development and Application of Colorization" it is known to use a Dubner Graphics Computer in colorizing black and white movies. This article describes the process of coloring black and white movies generally and than describes briefly the use of the Dubner Graphics in carrying out the process. However, from this article one cannot derive any suggestion of applying a color using an HLS system relating to the original grey scale values. The known method is based on the "overlay" principle of film coloring.

From the document US-A-4189743 a pseudocoloring method is known. The pseudocolor is the blanket application of a single color to a range of grey scale values of an underlaying image. It is most commonly seen in medical imaging. Moreover, the known pseudocoloring method results in images like a cartoon which cannot be compared with an actual photograph. The cartoon has a homogenous look to color, whereas an actual picture shows variations in hue and saturation. Moreover, there is no reality in the apparence of a pseudocolor work.

It is therefore an object of the present invention to provide a method and a system for color enhancing a series of image frames having an improved image quality and which additionally enables an operator to easily and more quickly realize the enhancement operation.

This object is solved according to the inventive method by the combination of the steps a) to e) of the claim 1.

A system for carrying through the inventive method is described in claim 16.

Further improved embodiments of the invention are resulting from the subclaims.

### Brief Description of the Figures

Figure 1 depicts in schematic form the creation of two adjacent frames of graphic information according to the method of the present invention.

Figure 2 is a schematic representation of a portion of the image memory structure according to one embodiment of the method of the present invention.

Figure 3 depicts the replication of a the region memory portion of the image memory structure of the present invention.

Figure 4 depicts the correction of a value stored in the replicated region memory portion of Fig. 3.

Figure 5 depicts the application of the HLS color model to the coloring of an array of picture elements stored in the image memory structure of Figs. 2-4.

Figure 6 depicts a schematic representation of the "histogram slide" operation according to the method of the present invention.

Figure 7 depicts a schematic representation of the "histogram multiplication down" operation according to the method of the present invention.

Figure 8 depicts a schematic representation of the "histogram multiplication up" operation according to the method of the present invention.

Figure 9 depicts a schematic representation of the "color bending" operation according to the method of the present invention.

### Detailed Description of the Invention

### General Process Overview

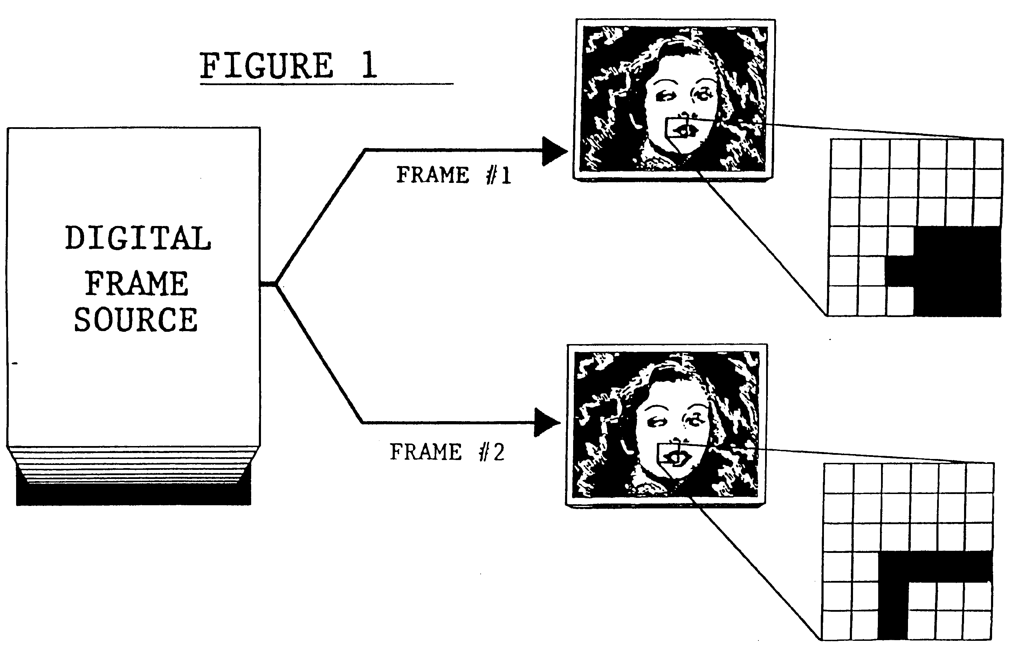

The film to be colored or color enhanced is first digitally recorded at a preselected resolution. In instances where the final product will be placed on conventional video tape, appropriate resolutions are employed. (E.g. NTSC=525 lines, PAL=640, HDTV=1125-1500) Where the final product will be used for theatrical presentation, resolutions of 1024 lines or more may be employed. The digitization process (depicted in Fig. 1) comprises projecting each frame of the original (typically black and white) film through a liquid gate device which masks scratches and other imperfections. The projected frame is captured using a video camera such as a saticon tube and the video signal is digitized and stored in a random access memory frame buffer. The digitization process allows adjustment of the intensity of light falling on the film in order to achieve the best contrast for the particular frame being digitized (gamma correction). After acquisition of a frame, the digital representation of the frame is stored in non- volatile storage for further processing. The digitization process is repeated on a frame-by-frame basis, marking each frame with a time and sequence indication (SMPTE time code).

For each scene (sequence of frames), a frame is selected as being representative of the majority of the elements present in the sequence. This "key frame" is used as a template for the enhancement of other frames within the scene sequence. For this reason, the greatest care is applied to the processing of key frames.

After key frames are color-enhanced and defined, they are passed with the rest of the frames comprising a scene to a work station where the regions defining the application of color are tracked from frame to frame. After each frame has been enhanced, it is re-stored in non-volatile storage and sent to a central storage were all enhanced scenes are eventually reassembled according to their original sequence as a final product motion picture.

### Key Frame Coloring

The first task of the key frame colorist is to identify areas of the image which comprise objects which will be designated to be of similar hue. Several software tools are available to the colorist to aid in this computer-interactive definition process.

A "free hand" mode allows drawing and erasing as well as control over a variably-sized cursor. A pointing device controls an interactive cursor displayed on a screen overlaying the key frame to be processed. Movement of the pointing device effects an analogous movement of the cursor and the picture elements selected by this movement (which are displayed on a graphics plane known as the "mask plane") are used to define the edge of an area. Because the cursor size may be reduced to only one pixel, the smallest region which may be produced is also one pixel.

A second drawing tool available to the colorist is one which defines polygons, rather than completely free-hand shapes. Using the pointing device, the colorist may indicate the precise placement of vertices which are intended to define the perimeter of a polygonal area. Each vertex may be assigned or removed and, when complete, the vertices may be completed to define a closed path.

After definition of a closed perimeter by free-hand or polygon methods, the enclosed area may be assigned to the region (by setting the bits in the mask plane) by using one of two filling algorithms. An "area fill" assigns all picture elements within the closed shape and up to the defined edge to the area. A "cartoon fill" combines the defined edges with edge recognition algorithms in order to fill an area which is bounded by a border line such as the black pen lines which are typical of cartoons. Cartoon fill mode fills up to, or slightly over such heavy border lines.

After areas have been defined for all objects having a common hue, the final step is the selection and application of a given hue to that area. Colors may be selected by interactively pointing to a color wheel displayed on a video screen, and then by manipulating control indicators on the video screen which allow refinement of the gray-scale information for the area as described below. After selection, the color may be displayed by its application to the areas (which are collectively known as a color mask.) After a color mask has been defined, its associated picture elements are identified as a "region", the mask plane is cleared, and additional masks are defined in a similar manner, one for each hue which will be displayed in the frame.

Once all regions are defined, the regions, the underlying frame, and the colors assigned to each region are stored for later retrieval by colorists who will reiterate the process using the subsequent frames of each scene and the key frame which has been defined.

The process of extrapolating color enhancement from key frames to entire scenes is performed by identifing and tracking motion as well as appearances and disappearances of objects. Generally fewer than 5% of the picture elements in a frame of a scene change in the succeeding frame. Because motion pictures are filmed at 24 frames per second, increments of motion on all but the most rapidly moving objects are extremely small and easily followed. Once motion has been identified, adjustment of the regions and application of the key frames' predefined colors to those regions is all that is required.

Implicit in all frame-to-frame tracking is the ability to copy predefined parts of the preceding or key frame's region memory contents and to use those parts in subsequent frame processing. After copying, small adjustments may be made to the new region memory contents and they may be saved with the new frame. Importantly, because the digitization process assures consistency of brightness and gray scale, and because colors are predefined by an art director working with key frames, overall consistency from frame-to-frame, and scene-to-scene is also assured.

The simplest form of tracking from frame to frame is where motion in the frame is apparent only as a result of a camera pan. In such instances, the entire region memory may be copied from that of the preceding frame and "shifted" in the direction of the pan. Such a shift will create an undefined area at the end opposite the motion. This area must then be added to the existing regions in order to completely apply color.

When only some of the objects of a frame move, a corresponding portion of the region memory may be translated as well. In this operation, that portion of the region memory which is to be moved is designated by the operator and is moved manually to its new location, thus overwriting the former contents of the region memory at the new location. The old location must then be re-defined and/or added to one or more pre-existing regions in order to apply color.

In highly complex scenes, where several types of motion are present, (especially compound motion of subject and camera) a "differencing" procedure is employed. A frame for which areas have been defined and to which color has been applied is subtracted from a next subsequent frame in order to reveal those picture elements which have changed (in gray-scale value). These areas of difference are then displayed as a contrasting overlay on the subsequent frame to be processed. Alternatively, an algorithm for edge detection in gray-scale images may be used and may be correlated to the previous frame's region memory. Detected differences may then cause the subsequent frame's regions to be adjusted or deleted, as required. By examining the coincidence of this overlay and the region structure which has been duplicated from the preceding frame, the production colorist is able to quickly designate areas which should be added to the region structure, and those which must be removed from a given region and reassigned.

The final operation is to assure that no objects have either completely appeared or disappeared from the frame. If an object disappears, its region must be removed. Similarly, newly appearing objects must have a region defined for them "on the fly" and a color assigned as well. After adjusting the region for the next subsequent image, the colorist again stores that image together with its region memory and repeats the process for each subsequent frame.

To permit quality control and review of a sequence of color-enhanced frames, two modes of viewing are used: Cine mode and Cycle mode. In cine mode, a series of frames is sequentially displayed, shuttling first in a forward direction, and then immediately in reverse. The speed may be controlled by the operator. In cycle mode, display direction and speed are directly tied to the pointing device to allow fine control over viewing frame-to-frame transitions.

### Hardware Overview

The method of the present invention is implemented on a special purpose version of an RTI-Station image processing system interfaced to a personal computer (such as the IBM\ personal computer AT). The RTI image processing subsystem (available from Recognition Technology, Inc. of Holliston, MA) comprises a video digitizer, a pipeline architecture pixel processor, and image memory which is all interconnected both by a host computer bus and by a sychronous video bus. The video digitizer takes its input from a video camera such as that described above for digitizing film frames, and outputs its information to a high definition color CRT (though not necessarily one interfaced by conventional NTSC video circuitry). The host computer bus permits the image processing subsystem to communicate with the user through the host CPU, its memory, associated mass storage devices, and I/O devices including pointing devices and keyboards.

The image processing subsystem of the preferred embodiment of the present invention comprises an image memory having 512 x 512 spatial resolution, 8 bits of brightness resolution, and 4 bits for region identification. Alternatively, the same system may be configured for 6 bits of brightness resolution and 6 bits of region identification or for 7 bits of brightness resolution and 5 bits of region identification. (One additional bit is reserved for use by the system in construction of the mask bit plane.) General information regarding the structure and operation of the RTI Station and its associated software library (RTILIB) may be found in the RTILIB/500 Tutorial Revision 1.00 and the RTILIB/500 User Manual Revision A, which are published by Recognition Technology, Inc.

Although the currently used implementation employs a 512 line spatial resolution, it will be recognized by those skilled in the art that increases to and above 2000 line spatial resolution are within the scope of the present invention. Additionally, the image memory may be a part of a larger frame store memory which may be, for instance, 4096 x 4096 x 16 bits. The display of frames may then be controlled by a memory pointer into this frame store.

For the purpose of color selection, the host CPU is provided with a 24 bit RGB video board (such as the Targa 24, a product of AT&T Information Systems, Inc.) A color wheel which corresponds to the common base of the HLS cone is displayed on a video screen. Using a pointing device, the colorist selects a particular color on the wheel, thus defining both hue (angular position on the color wheel) and saturation (distance from the center). As described more fully below, this unique 24 bit RGB value is translated immediately into the HLS coordinate space, correlated to the modified image gray-scale, and retranslated for output on an RGB monitor.

### Software Overview

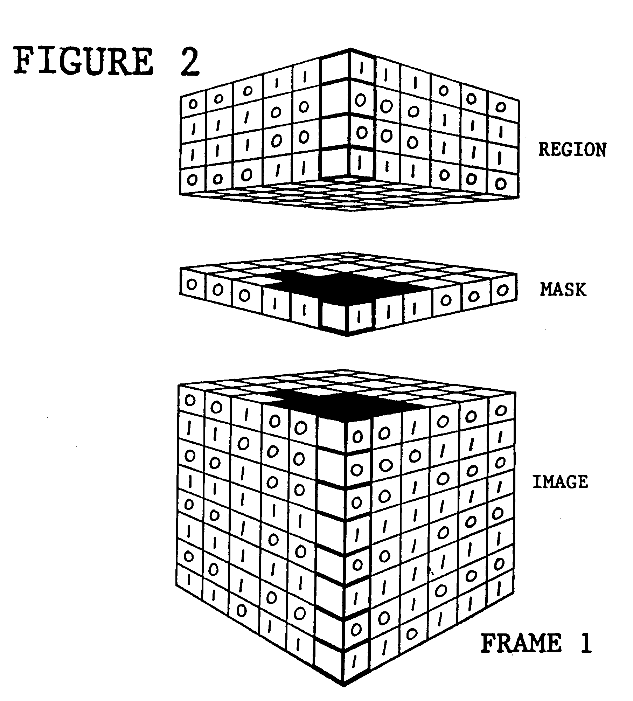

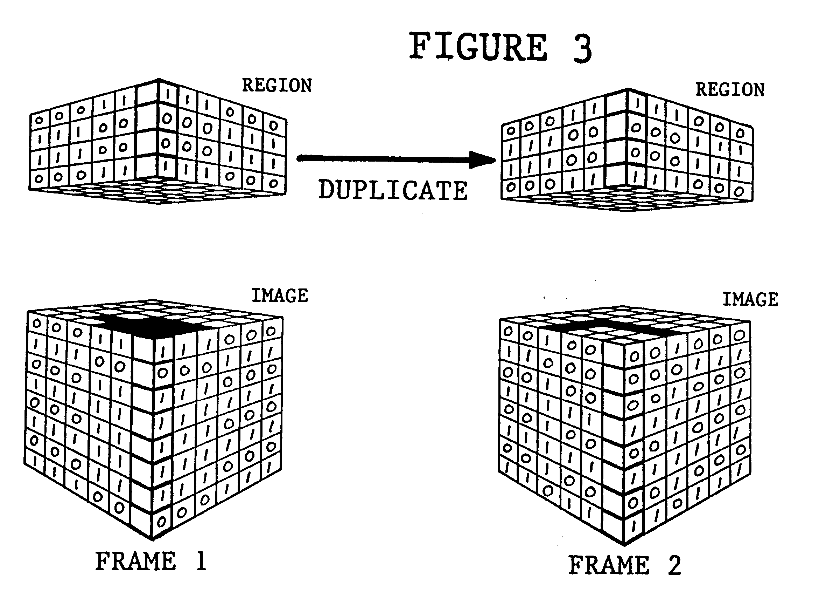

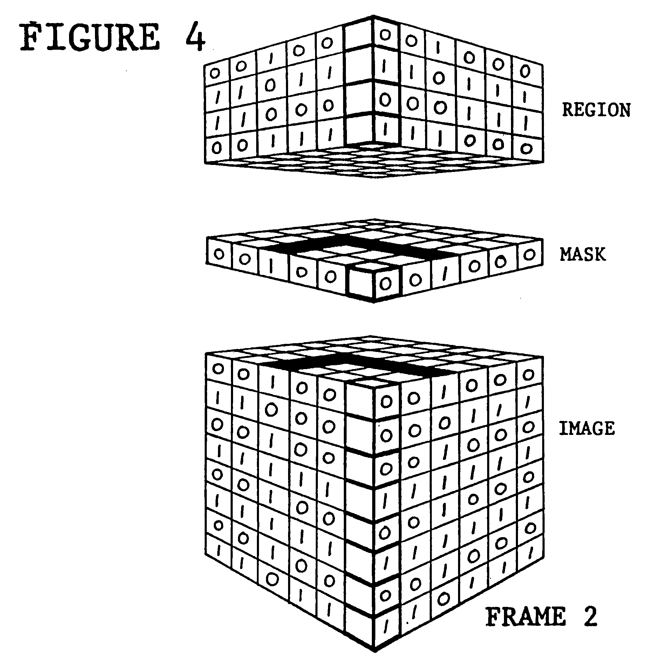

Referring now to Figs. 1-4, according to the method of the present invention, a series of digitized monochrome images may be stored in a random access memory of a computer as an array of gray-scale values. For example, 8 bits of information may be used to represent each picture element, thus permitting a total of 256 unique gray-scale values to be represented. (Of course, more bits may be used to achieve better resolution and dynamic range for the gray-scale information.) The digitization step may optionally include the use of look-up tables in order to enhance contrast, adjust gamma, enhance edge definition or "stretch" the gray-scale of a faded image. Associated with the memory used to store the gray-scale values is a region memory used to uniquely identify each picture element with one of a number of regions (depicted as a four bit memory structure in Figs. 2-5). In addition to the image memory and region memory structures, a mask plane memory is also associated with the image for use in identifying picture elements. Through conventional techniques, the contents or parts of the contents of these memory structures may be copied from one structure to another (for example, from the region memory to the mask plane memory) or from one frame's memory to another (as depicted in Fig. 3 for the transfer of frame 1 region memory to frame 2 region memory). The copied contents may, of course, be altered by the operator to conform to the underlying frame contents as depicted in Fig. 4.

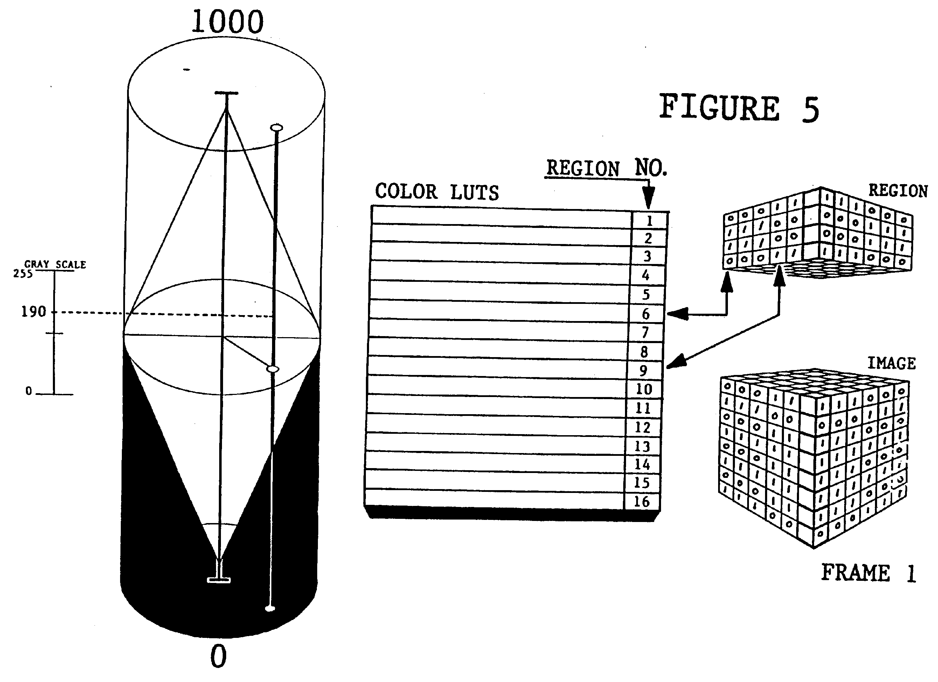

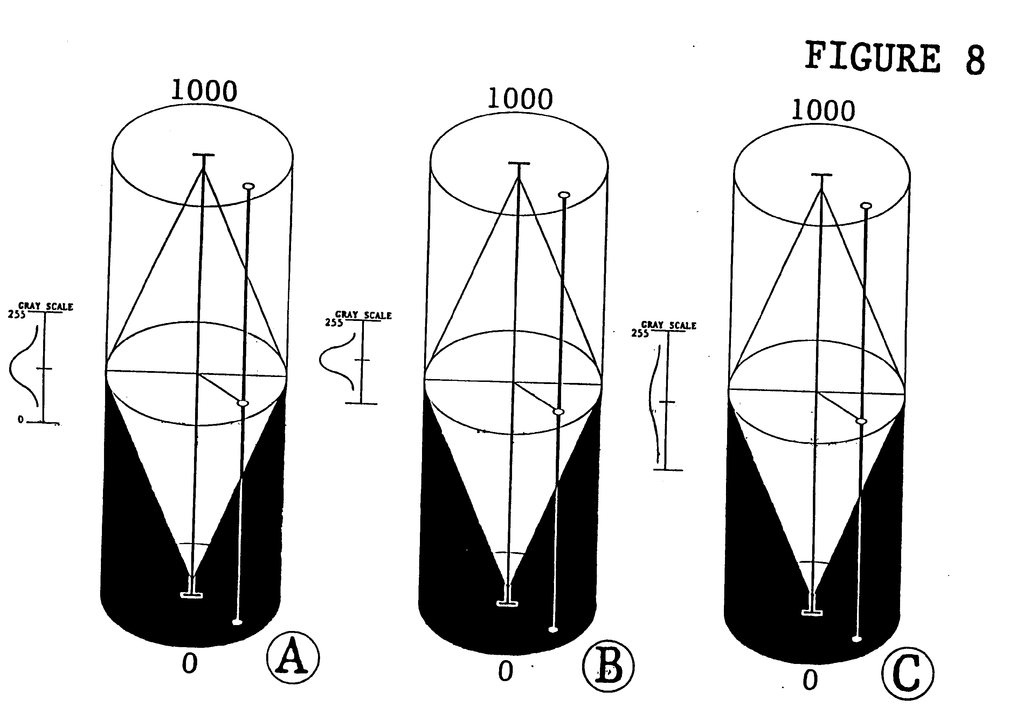

As depicted in Figs. 5-9, the colorist has at his or her disposal a number of software-implemented tools which control the construction of the color transfer function. For computational efficiency, the luminance axis of HLS cylindrical space is represented as an integer range of [0..1000] (as opposed to the conventional representation as a real number in the range [0..1.0]). The gray-scale of a frame is linearly related to the integer range by defaulting a gray-scale value of 128 to a luminance value of 500, and corresponding each discrete gray-scale unit to each integer of luminance. (Thus, 255 gray-scale corresponds by default to a luminance of 627.)

In order to affect the color transfer function constructed by the system, the colorist actually manipulates the frame gray-scale information by applying histogramming techniques such as translation, compression, and stretching.

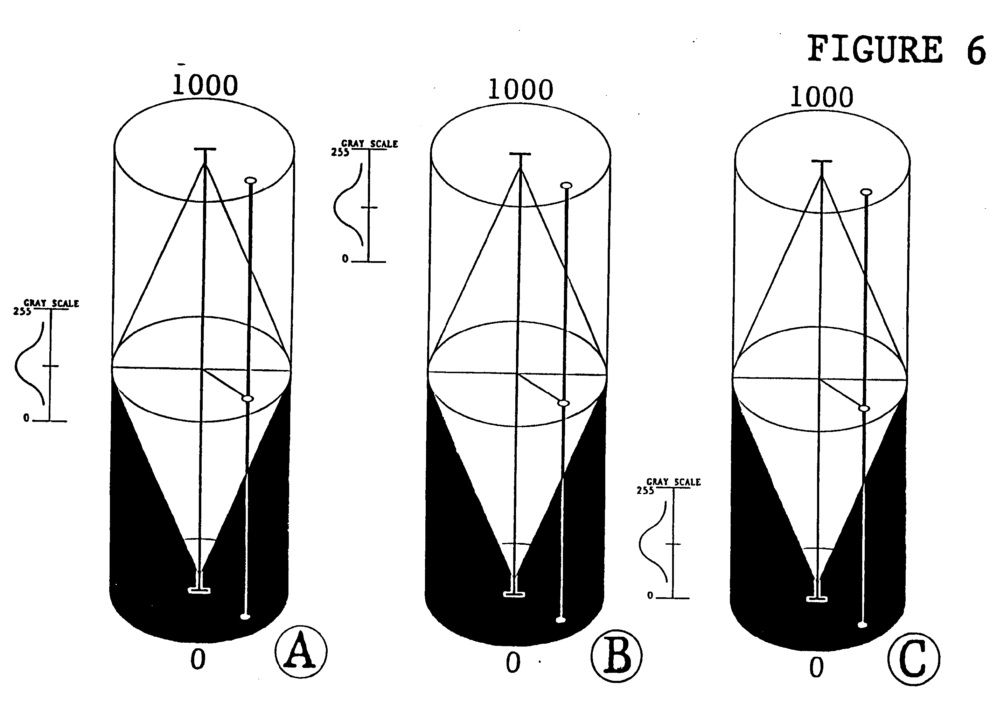

Specifically, the entire gray-scale may be made to appear either more or less luminous by a simple "slide" of the gray-scale (GS) with respect to the luminance scale (Fig. 6). Instead of corresponding GS = 128 to L = 500, the operator may instead choose to brighten the frame by choosing L = 750. Similarly, the frame may be darkened by choosing L = 350. As depicted in Fig. 6, the portion of the color transfer function falling within the HLS conic space which corresponds to the gray-scale is controlled by this slide operation. At its extremes, the operation creates a threshhold in the transfer function beyond which all gray-scale values are displayed as either white (above the upper threshhold), or as black (below the lower one).

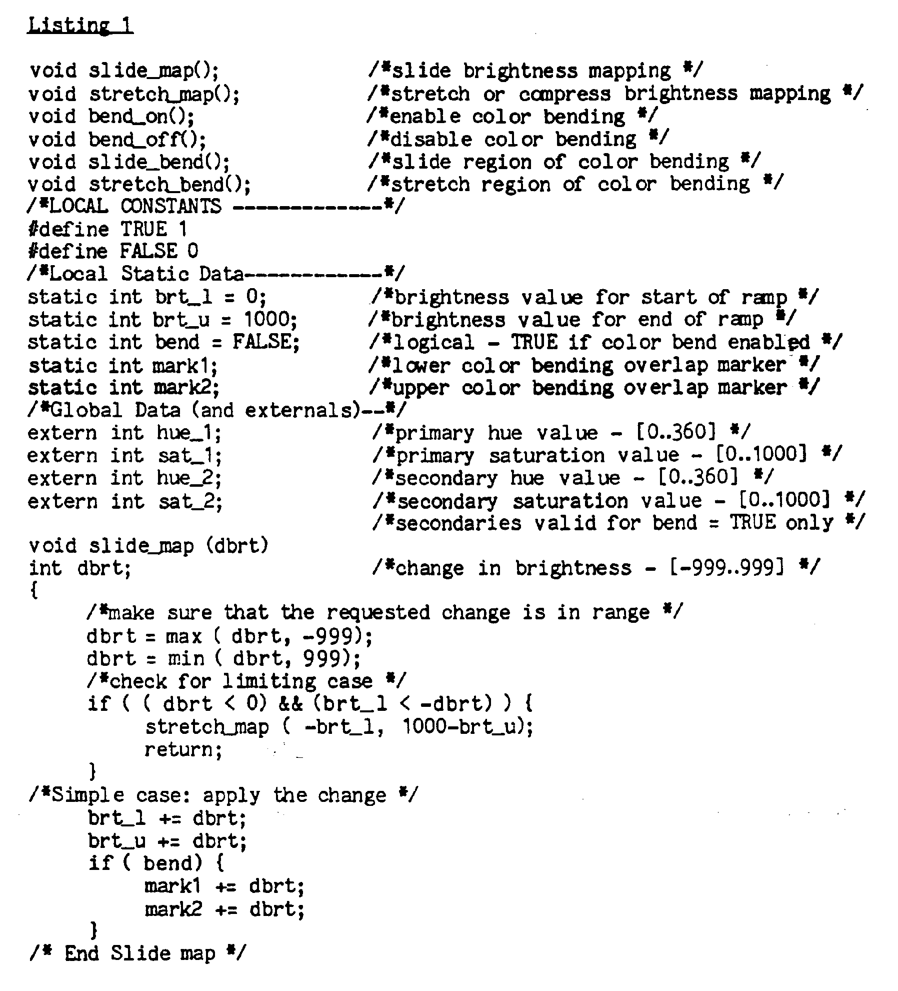

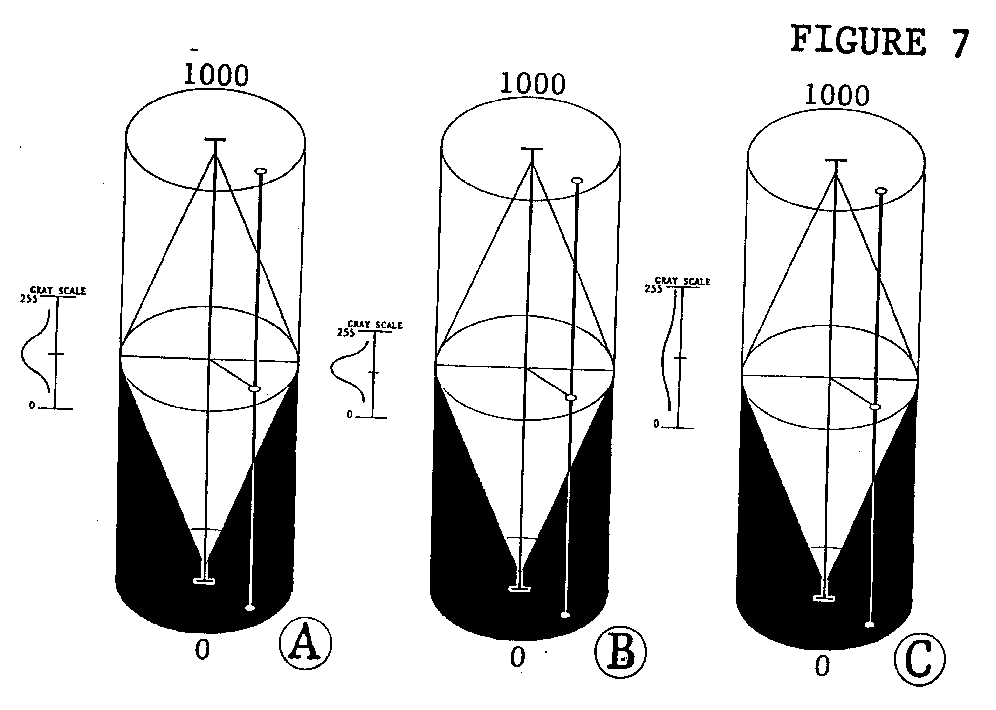

Another operation available to the colorist is a ratiometric multiplication of the gray-scale by a value (depicted in Figs. 7-8). When the multiplier value is a fraction less than one, a ratiometric compression of the gray-scale occurs which relates the 256 discrete gray-scale values to fewer than 256 integer luminance values. When the multiplier value is greater than unity, a "stretch" of the gray-scale occurs which results in a correspondence of the 256 gray-scale values to a range of luminance greater than 256. These multiplications may also occur using either end of the gray-scale as a fixed point, yielding 4 variations as depicted in Figs. 7-8.

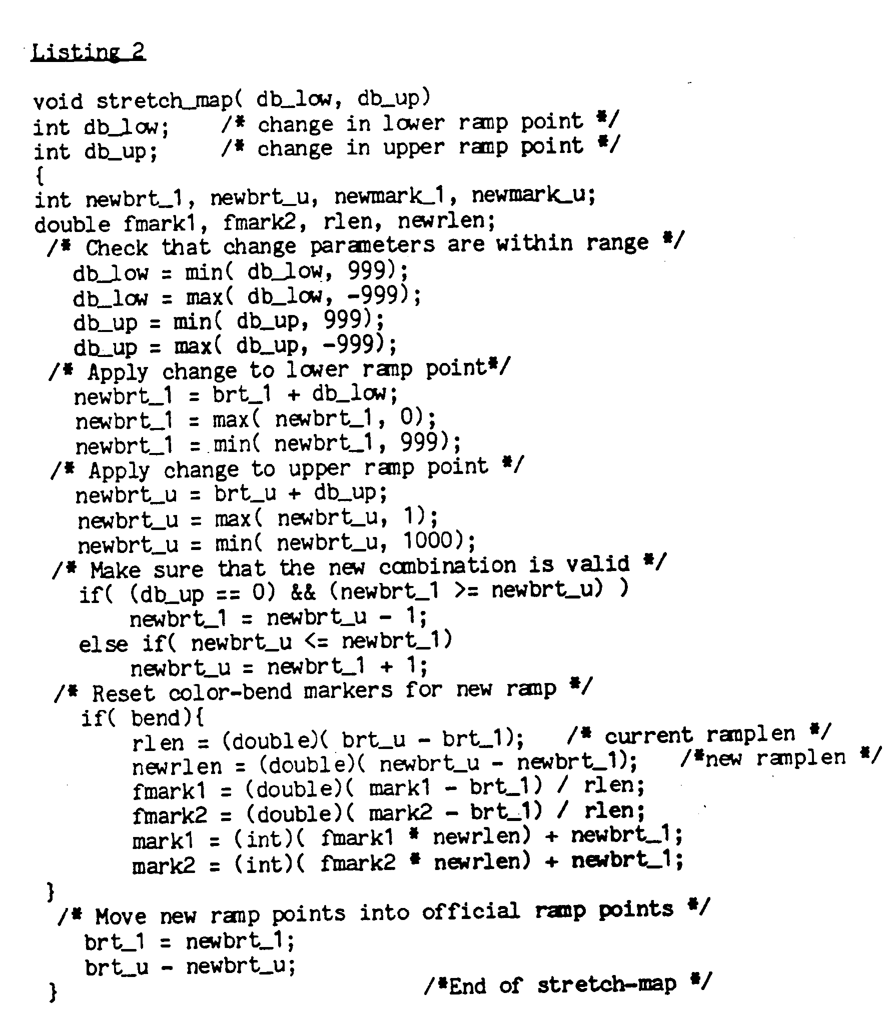

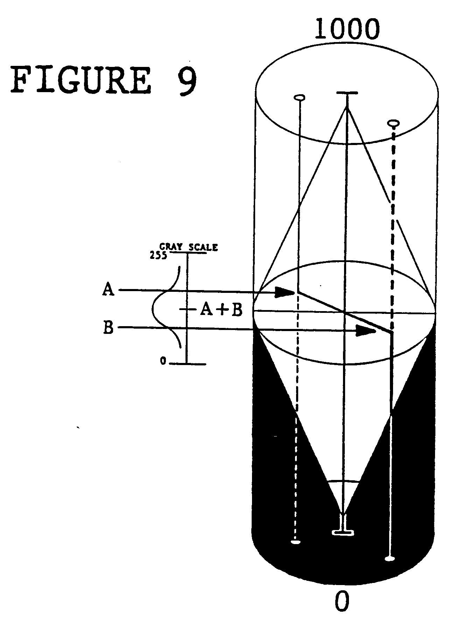

In depicting reflected light (either originating from a colored source, reflecting from a colored surface, or both), it is necessary to "bend" the color transfer function. As shown in Fig. 9, the colorist has available the option of setting a pair of "bending points" for the function which determine the nature and extent of the bending. These points, depicted in Fig. 9, (as points A and B) define the endpoints of three line segments (0B, BA, and A1). Of these segments, the first and last each have associated with them unique, operator-selected values of hue, while the AB segment represents a mixture of hues and saturations. The locations of points A and B are defaulted to 25% and 75% of the current gray-scale range, thus providing color mixing over one-half of the gray-scale. These locations, however, may be changed by the operator to change the "rate" of color bending.

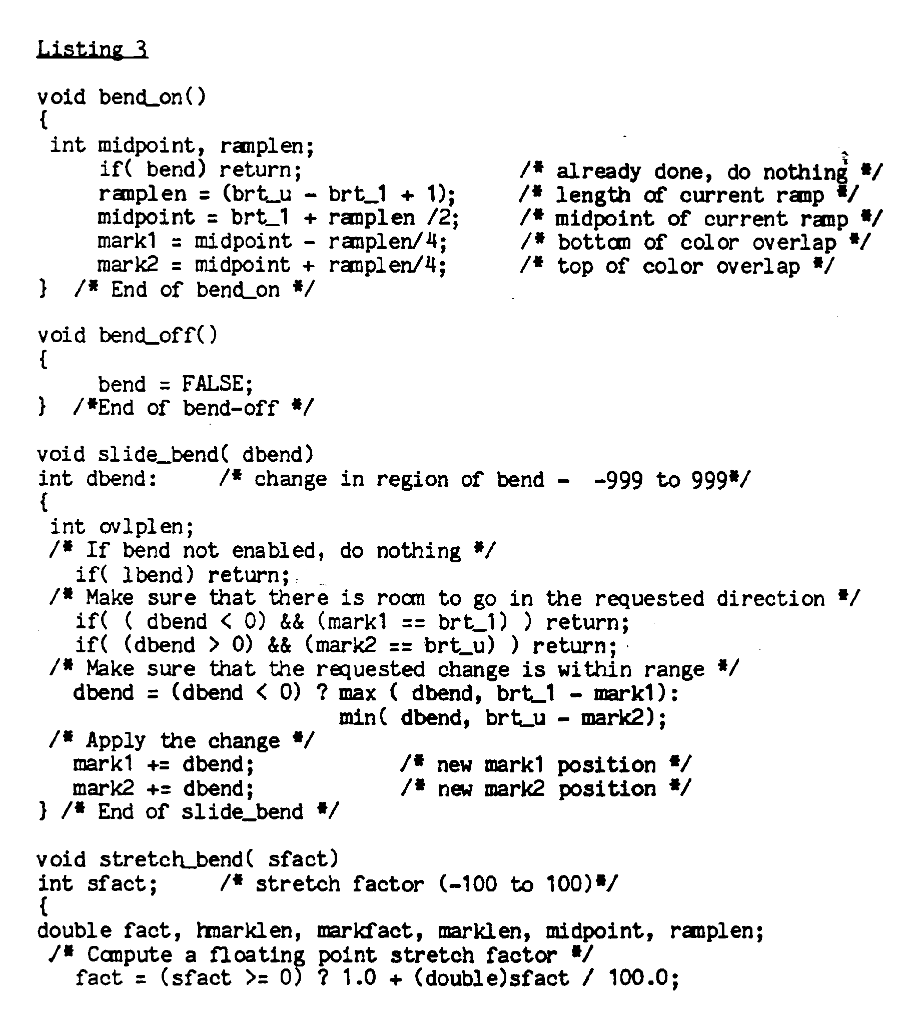

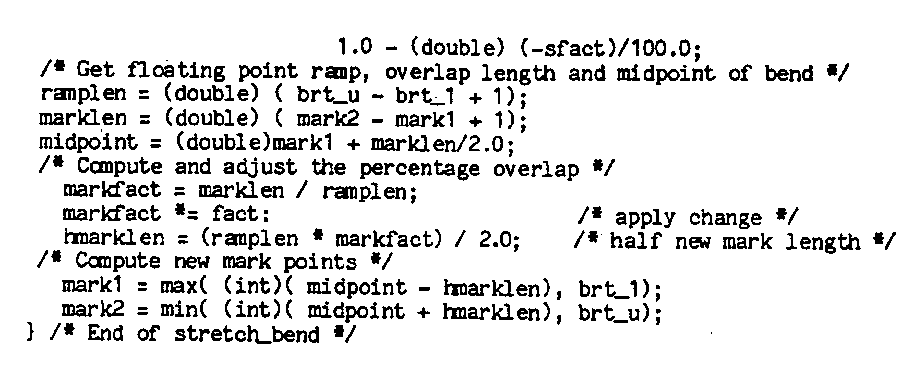

As an example of bending, consider the selection of a 0B hue as flesh tone, and the A1 hue as orange (as would be the case if a face were viewed by reflected fire light). The BA segment would contain hues which are flesh tones in the less bright areas, but for brighter ones, take on more and more orange appearance. Of course, it will be appreciated that the selection of the locations of points A and B or the inclusion of additional bending points are fully within the spirit of the technique.

Because regions are defined so as to include all objects of a similar hue, regions contain a wide range of picture element gray-scale values. In order to accurately represent the gray-scale values in the final colored image, a color transfer function must be defined for converting the one-dimensional gray-scale to a set of three dimensional HLS values. From the point on the displayed color wheel chosen by a key frame colorist, a line segment is extended vertically parallel to the axis of the cylindrical HLS universe. This line segment passes through the points in the HLS cones which represent the colors to be applied within the region, and comprises the color transfer function. For example, an 8 bit picture element having a gray-scale value of 190 is represented on the gray-scale of Figure 5. The corresponding point on the upper segment of the color transfer function defined a unique HLS value which will be applied to those picture elements within the region having the 190 gray-scale value. Where the line segment does not fall within the HLS conic space, the representation is either pure white (in the region above L = 0.5) or pure black (in the region below L = 0.5). It will be recognized that because the color transfer function traverses a portion of the altitude of HLS coordinate space, points which fall at either extreme of the gray-scale are correspondingly less saturated when displayed in color. This renders the displayed colors much more realistic than systems using constant saturations.

Specular highlights are those areas of particularly bright reflection due to angle of incidence effects. The production of colorless specular highlights can be produced by applying the histogram stretch technique described above to "pull" brighter gray-scale values outside of the HLS cone, thus making them appear white. The extent of this stretch controls the appearance of the specular highlight.

Referring again to Figure 9, there is depicted a schematic representation of the method by which both specular highlights and reflection of colored light sources may be achieved. Although human perception is, in fact, best represented by the HLS double cone, the actual physics of color and light are best represented by an HLS cylinder which has luminance as its axis, and saturation as its radius. Within this cylinder is inscribed the conic perceptual space. This conic space defines the limits of human perception, and the precise shape and size of the cones varies from person to person. (A colorblind person, for example, has a cone with a "flattened" side, while one with night-blindness has an extremely truncated lower cone.) By manipulating gray-scale information representing an image, the color transfer function by which gray-scale is transformed into hue, luminance, and saturation is affected, and a variety of effects are produced.

### Glossary of Terms

Image - monochrome or color analog picture
Picture Elements - discrete locations in an image
Brightness - the absolute amount of light transmitted through a monochrome image (dependent on incident light intensity)
Capturing an Image Digitally - recording digital data representative of an image and from which an image can be re-created.
Gray-Scale Value- relative amount of light transmitted through a point on a monochrome image (dependent on incident light intensity)
Luminance - the absolute amount of light emitted by, or transmitted through a point on a color image
Hue - the peak or primary wavelength emitted by or transmitted through a point on a color image
Saturation - the relative number of primary to complementary points in a given area of a color image (more primary = higher saturation)
Region - a data structure in memory used to identify a group of picture elements to which a defined color transfer function is to be applied.
Mask - a data structure (commonly a graphics plane) in memory used to identify a group of picture elements to be acted upon, such as by their inclusion within a region.
Map - a data structure (commonly a multi-bit graphics plane) for identifying one or more regions of an image, each such region comprising picture elements representative of one or more objects or image areas having the common property.
Specular Highlight - region of high brightness (monochrome) or high luminance (color) brought about by direct (angle of incidence) reflection of a light source.

### Statement of Industrial Utility

The method and apparatus of the present invention is useful in the color enhancement of achromatic images such as still photographs, motion pictures, video taped images, telemetry data, and the like.

## Claims

1. A method of color enhancing an image comprising the steps of:
a) capturing the image digitally, as a series of picture elements, each having a gray-scale value representative of its brightness;
b) defining one or more masks, each comprising one or more closed regions of picture elements representative of one or more operator-perceived objects within the image having the same operator-designated hue;
c) defining on the basis of the HLS model of hue, luminance and saturation, a color transfer function for each of said masks identifying each of said picture element gray-scale values within each of said masks with a unique combination of hue, luminance, and saturation values comprising the steps of:
1. selecting an arbitrary operator-defined hue value intended for application to the picture elements corresponding to each of said masks, said hue value corresponding to a plane of particular angular displacement around the luminance axis of the HLS model,
2. selecting a range of luminance values representative of the brightness of said picture elements corresponding to each of said masks, by extending along the luminance axis, a corresponding region on said plane,
3. selecting a range of saturation values representative of the saturations of the picture elements corresponding to each of said masks, by selecting a corresponding range of distances from the luminance axis, and
4. constructing a predetermined color transfer function relating said range of luminance values to said range of saturation values for each of said masks by extending a line segment parallel to the luminance axis on said plane within said region and within said range of distances;
d) applying said color transfer function for each of said masks to said corresponding picture element gray-scale values, thereby deriving unique combinations of hue, saturation, and luminance values corresponding to each gray-scale value; and
e) assigning said derived hue, saturation, and luminance values to said picture elements corresponding to each of said masks.

2. The method of claim 1, wherein said picture element gray-scale values are modified prior to step d) by stretching the gray-scale.

3. The method of claim 1, wherein said picture element gray-scale values are modified prior to step d) by compressing the gray-scale.

4. The method of claim 1, wherein said picture element gray-scale values are modified prior to step d) by sliding the gray-scale.

5. The method of claim 1, wherein step a) further comprises:
selecting an arbitrary first hue value representative of the operator-designated hue of the objects;
selecting an arbitrary second hue value representative of the operator-designated hue of an illumination source; and
wherein step d) further comprises constructing a predetermiend hue-luminance-saturation transfer function relating said ranges of saturation and luminance values to said first and second hue values.

6. The method of claim 1, wherein step c) further comprising the steps of:
a. selecting a luminance value representative of the average brightness of the picture elements corresponding to said mask;
b. selecting a range of hue values representative of the hues of said picture elements corresponding to said mask;
c. selecting a range of saturation values representative of the saturations corresponding to said mask;
d. constructing a predetermined hue-saturation transfer function relating said range of hue values of said range of saturation values.

7. The method of claim 1, step b) wherein at least one of said regions is defined by the steps of:
a. selecting an upper or lower threshold gray-scale value representative of the edge of a contiguous group of picture elements having common brightness;
b. analyzing the picture elements in a predefined area (brush tip) of said captured image to determine their median brightness and
c. if the median brightness of the picture elements within said predefined area is above said lower threshold or below said upper threshold, then designating said picture elements as being included in said region.

8. The method of claim 7, wherein said predefined area (brush tip) is a square matrix of predetermined dimensions.

9. The method of claim 7, wherein said predefined area (brush tip) is a circular matrix of predetermined dimensions.

10. The method of claim 1, wherein at least one of said gray-scale regions is defined by manually designating the bounds of one or more areas using a pointing device to create a mask.

11. A method of color enhancing a series of image frames comprising the steps of:
a) capturing and storing each image frame digitally, as a series of picture elements, each having a gray-scale value representative of its brightness;
b) interactively designating one of said captured frames as a key frame;
c) using said key frame, interactively defining one or more maps, each comprising one or more closed regions of picture elements representative of one or more objects designated to have the same hue;
d) defining for at least one of said masks a color transfer function identifying said picture element gray-scale values with unique combinations of hue, luminance, and saturation values according to the method of claim 1;
e) correlating said picture element gray-scale values to said color transfer function, thereby deriving unique hue, saturation, and luminance values corresponding to each gray-scale value, and
f) assigning said hue, saturation, and luminance values to said picture elements comprising said mask;
g) storing said mask in association with said key frame;
h) sequentially recalling said stored image frames, and for each frame:
i) comparing said recalled frame with the preceding frame, to determine differences in the locations of said objects;
j) establishing a modified mask by modifying a copy of each of said masks by selective deletion of picture elements which no longer define said objects, and addition of picture elements which define said objects, in accordance with said determined differences in the locations of said objects; and
k) storing said modified masks in assocation with said recalled frames.

12. The method of claim 1, wherein the step d) further comprising the steps of:
a) determining whether said unique saturation value which corresponds to said picture element gray-scale value is beyond a maximum saturation value limit which approximates the maximum, visually perceivable saturation value for said unique luminance value which corresponds to said picture element gray-scale value; and
b) assigning said maximum saturation value as a new saturation value for said picture element if said unique saturation value is beyond the maximum saturation value for said unique luminance values which corresponds to said picture element gray-scale value.

13. The method of claim 12, wherein said maximum saturation values for all unique luminance values defines a boundary for a double conic space in a hue, luminance, saturation (HLS) coordinate system.

14. The method of claim 13, wherein said double conic space is symmetrical about a central point located midway between a maximum unique luminance value and a minimum unique luminance value.

15. The method of claim 14, wherein said double conic space is asymmetrical about said central point.

16. A system for color enhancing an image comprising:
a) means for capturing the image digitally, as a series of picture elements, each having a gray-scale value representative of its brightness;
b) means for defining one or more masks, each comprising one or more closed regions of picture elements representative of one or more operator-perceived objects within the image having similar operator-designated hue;
c) means for defining a color transfer function for each of said mask identifying said picture element gray-scale values within each of said mask with unique combinations of hue, luminance, and saturation values according to the method of claim 1;
d) means for applying said color transfer function to said picture element gray-scale values, thereby deriving unique hue, saturation, and luminance values corresponding to each gray-scale value, and
e) means for assigning said derived hue, saturation, and luminance values to said picture elements corresponding to said masks.

17. A system for coloring a monochrome image according to claim 16, further comprising:
a) means for digitally storing said image as a multiplicity of pixels, each represented by a specific gray scale value;
b) means for storing the values of a separate color transfer function for each of said regions; and
c) means for digitally storing, for each pixel, a region identifier by which one of said color transfer functions is associated with said pixel.

18. The system of claim 17, wherein a) and c) are part of a multi-bit memory structure comprising a first memory structure and a second memory structure.

19. The system of claim 18, wherein for each pixel of said image, said first memory structure contains a 8 bit gray-scale value and said second memory structure contains a 4 bit region identifier value.

20. The system of claim 17, further comprising an additional memory structure adapted to contain pixel identification information designating which pixels are identified with a particular region.

21. The system of claim 17, wherein a) and c) of claim 17, are part of multi-bit memory structure comprising, for each pixel a first memory structure containing an 8 bit of gray-scale value and a second memory structure containg a 4 bit region identifier value; and the system further comprises an additional one-bit memory structure adapted to contain, for each pixel, pixel identification information designating which pixels are identified with particular region.

22. In a method for selectively coloring at least one picture element of an image belonging to a series of images, said image comprising a multiplicity of picture elements, the method performing the combination of image information from mask-defined regions of the image with color information according to claim 1, and consisting of:
a) assigning to an image to be colored, mask-defining region information and color information from a previous image;
b) moving at least one of said mask-defined regions a predetermined distance along a predetermined axis to a moved location and storing mask-defining region information for said image to be colored at the moved location.

23. The method of claim 22, wherein said at least one of said mask-defined regions consists of all mask-defined regions in said previous image.

24. The method of claim 23, including the further step of assigning those pixels which are within a mask-defined region of the previous image and are not within a correspondig moved mask-defined region to an additional mask-defined region.

## Patentansprüche

1. Verfahren zur Farbverstärkung eines Bildes mit den folgenden Schritten:
a) digitales Einfangen des Bildes als eine Reihe von Bildelementen, die jeweils einen Grauskalenwert aufweisen, der repräsentativ für ihre Helligkeit ist;
b) Definieren einer oder mehrerer Masken, die jeweils ein oder mehrere geschlossene Gebiete von Bildelementen aufweisen, die repräsentativ für einen oder mehrere operator-wahrgenommene Objekte innerhalb des Bildes sind, die denselben operator-bestimmten Farbton aufweisen;
c) Definieren einer Farbübertragungsfunktion auf der Basis des HLS-Modells des Farbtons, der Helligkeit und der Sättigung für jede der Masken, wobei jeder der Bildelementgrauskalenwerte innerhalb jeder der Masken mit einer eindeutigen Kombination von Farbton-, Helligkeits- und Sättigungswerten identifiziert wird, mit den folgenden Schritten:
1. Auswahl eines beliebigen operator-definierten Farbtonwertes, der für die Anwendung auf die Bildelemente bestimmt ist, die jeder der Masken entsprechen, wobei der Farbtonwert einer Ebene besonderer angularer Verschiebung um die Helligkeitsachse des HLS-Modells entspricht,
2. Auswahl eines Bereichs von Helligkeitswerten, die repräsentativ für die Helligkeit der Bildelemente sind, die jeder der Masken entsprechen, indem entlang der Helligkeitsachse ein entsprechendes Gebiet auf der Ebene erstreckt wird,
3. Auswahl eines Bereichs von Sättigungswerten, die repräsentativ für die Sättigung der Bildelemente sind, die jeder der Masken entsprechen, indem ein entsprechender Bereich von Entfernungen von der Helligkeitsachse ausgewählt wird und
4. Konstruktion einer vorherbestimmten Farbübertragungsfunktion, die den Bereich von Helligkeitswerten zu dem Bereich von Sättigungswerten für jede der Masken in Beziehung setzt, indem ein Liniensegment parallel zu der Helligkeitsachse auf der Ebene innerhalb des Gebiets und innerhalb des Bereichs der Abstände erstreckt wird;
d) Anwenden der Farbübertragungsfunktion für jede der Masken auf die entsprechenden Bildelementgrauskalenwerte, wodurch eindeutige Kombinationen von Farbton-, Sättigungs- und Helligkeitswerten abgeleitet werden, die jedem der Grauskalenwerte entsprechen; und
e) Zuordnung der abgeleiteten Farbton-, Sättigungs- und Helligkeitswerte zu den Bildelementen, die jeder der Masken entsprechen.

2. Verfahren gemäß Anspruch 1, wobei die Bildelementgrauskalenwerte vor Schritt d) durch Dehnung der Grauskalen modifiziert werden.

3. Verfahren gemäß Anspruch 1, wobei die Bildelementgrauskalenwerte vor Schritt d) durch Komprimieren der Grauskalen modifiziert werden.

4. Verfahren gemäß Anspruch 1, wobei die Bildelementgrauskalenwerte vor Schritt d) durch Verschieben der Grauskalen modifiziert werden.

5. Verfahren gemäß Anspruch 1, wobei Schritt a) weiterhin umfaßt:
Auswahl eines beliebigen ersten Farbtonwertes, der repräsentativ für einen operator-bestimmten Farbton des Objekts ist;
Auswahl eines beliebigen zweiten Farbtonwertes, der repräsentativ für den operator-bestimmten Farbton einer Beleuchtungsquelle ist; und
wobei Schritt d) des weiteren die Konstruktion einer vorherbestimmten Farbton-Helligkeits-Sättigungsübertragungsfunktion umfaßt, die die Bereiche der Sättigungs- und Helligkeitswerte zu den ersten und zweiten Farbtonwerten in Beziehung setzt.

6. Verfahren gemäß Anspruch 1, wobei Schritt c) des weiteren folgende Schritte umfaßt:
a. Auswahl eines Helligkeitswertes, der repräsentativ für die durchschnittliche Helligkeit des Bildelements ist, das der Maske entspricht;
b. Auswahl eines Bereichs von Farbtonwerten, der repräsentativ für die Farbtöne des Bildelements ist, die der Maske entsprechen;
c. Auswahl eines Bereichs von Sättigungswerten, die repräsentativ für die Sättigungen sind, die den Masken entsprechen;
d. Konstruktion einer vorherbestimmten Farbtonsättigungs-Übertragungsfunktion, die den Bereich der Farbtonwerte des Bereichs von Sättigungswerten in Beziehung setzt.

7. Verfahren gemäß Anspruch 1, Schritt b) wobei mindestens eines der Gebiete durch die folgenden Schritte definiert ist:
a. Auswahl eines oberen und unteren Grauskalenschwellenwerts, der repräsentativ für die Kante einer benachbarten Gruppe von Bildelementen ist, die eine gemeinsame Helligkeit aufweisen;
b. Analyse der Bildelemente in einem vorherbestimmten Gebiet (Pinselspitze) des eingefangenen Bildes, um ihre mittlere Helligkeit zu bestimmen, und
c. Bestimmung der Bildelemente als in dem Gebiet enthalten, wenn die mittlere Helligkeit der Bildelemente innerhalb der vorbestimmten Fläche oberhalb des unteren Schwellwerts oder unterhalb des oberen Schwellwerts liegt.

8. Verfahren gemäß Anspruch 7, wobei die vorherbestimmte Fläche (Pinselspitze) eine quadratische Matrix vorherbestimmter Dimension ist.

9. Verfahren gemäß Anspruch 7, wobei die vorherbestimmte Fläche (Pinselspitze) eine kreisförmige Matrix vorherbestimmter Dimension ist.

10. Verfahren gemäß Anspruch 1, wobei wenigstens eine der Grauskalenregionen dadurch definiert ist, daß von Hand die Grenzen einer oder mehrerer Flächen bestimmt werden, indem eine Zeigevorrichtung zum Erzeugen einer Maske verwendet wird.

11. Verfahren zur Farbverstärkung einer Reihe von Bildrahmen, das die folgenden Schritte umfaßt:
a) digitales Einfangen und Speichern jedes Bildrahmens als eine Reihe von Bildelementen, die jeweils einen Grauskalenwert aufweisen, der repräsentativ für ihre Helligkeit ist;
b) interaktive Bestimmung eines der eingefangenen Rahmen als einen Schlüsselrahmen;
c) Verwendung des Schlüsselrahmens, wobei interaktiv eine oder mehrere Karten definiert werden, die jeweils ein oder mehrere geschlossene Gebiete von Bildelementen umfassen, die repräsentativ für ein oder mehrere Objekte sind, die bestimmt sind, denselben Farbton zu haben;
d) Definieren einer Farbübertragungsfunktion für wenigstens eine der Masken, die die Bildelementgrauskalenwerte mit eindeutigen Kombinationen von Farbton-, Helligkeit und Sättigungswerten gemäß Anspruch 1 identifiziert;
e) Korrelieren der Bildelementgrauskalenwerte mit der Farbübertragungsfunktion, wobei dadurch eindeutige Farbton-, Sättigungs- und Helligkeitswerte abgeleitet werden, die jedem der Grauskalenwerte entsprechen, und
f) Zuordnen der Farbton-, Sättigungs- und Helligkeitswerte zu den Bildelementen, die die Maske aufweisen;
g) Speichern der Maske in Verbindung mit dem Schlüsselrahmen;
h) sequentielles Abrufen der gespeicherten Bildrahmen und Durchführen der folgenden Schritte für jeden Rahmen:
i) Vergleichen des abgerufenen Rahmens mit dem vorhergehenden Rahmen, um Unterschiede hinsichtlich der Position der Objekte zu bestimmen;
j) Etablieren einer modifizierten Maske durch Modifizieren einer Kopie von jeder der Masken durch selektives Löschen von Bildelementen, die nicht mehr die Objekte definieren, und Hinzufügen von Bildelementen, die die Objekte in Einklang mit den bestimmen Unterschieden hinsichtlich der Position der Objekte definieren; und
k) Speichern der modifizierten Masken in Verbindung mit den abgerufenen Rahmen.

12. Verfahren gemäß Anspruch 1, wobei Schritt d) des weiteren die folgenden Schritte umfaßt:
a) Bestimmen, ob der eindeutige Sättigungswert, der dem Bildelementgrauskalenwert entspricht, jenseits einer maximalen Sättigungswertgrenze liegt, die den maximalen visuell wahrnehmbaren Sättigungswert für den eindeutigen Helligkeitswert, der den Bildelementgrauskalenwerten entspricht, approximiert; und
b) Zuordnen des maximalen Sättigungswerts als einen neuen Sättigungswert für die Bildelemente, wenn der eindeutige Sättigungswert jenseits des maximalen Sättigungswertes für die eindeutigen Helligkeitswerte liegt, was dem Bildelementgrauskalenwert entspricht.

13. Verfahren gemäß Anspruch 12, wobei die maximalen Sättigungswerte für alle eindeutigen Helligkeitswerte eine Grenze für einen doppelt konischen Raum in einem Farbton-, Helligkeits- und Sättigungs-(HLS)-Koordinatensystem definieren.

14. Verfahren gemäß Anspruch 13, wobei der doppelt konische Raum symmetrisch um einen Zentralpunkt ist, der in der Mitte zwischen einem maximalen eindeutigen Helligkeitswert und einem minimalen eindeutigen Helligkeitswert liegt.

15. Verfahren gemäß Anspruch 14, wobei der doppelt konische Raum asymmetrisch um den zentralen Punkt ist.

16. System zur Farbverstärkung eines Bildes mit:
a) einer Vorrichtung, zum digitalen Einfangen eines Bildes aus einer Reihe von Bildelementen, die jeweils einen Grauskalenwert aufweisen, der repräsentativ für ihre Helligkeit ist;
b) einer Vorrichtung zum Definieren einer oder mehrerer Masken, die jeweils ein oder mehrere geschlossene Gebiete von Bildelementen aufweisen, die repräsentativ für ein oder mehrere operator-wahrgenommene Objekte innerhalb des Bildes sind, das ähnliche operator-bestimmte Farbtöne aufweist;
c) einer Vorrichtung zum Definieren einer Farbübertragungsfunktion für jede der Masken, wobei die Bildelementgrauskalenwerte innerhalb jeder Maske mit einer eindeutigen Kombination von Farbton-, Helligkeits- und Sättigungswerten gemäß dem Verfahren nach Anspruch 1 identifiziert werden;
d) einer Vorrichtung zum Anwenden der Farbübertragungsfunktion auf die Bildelementgrauskalenwerte, wodurch eindeutige Farbton-, Sättigungs- und Helligkeitswerte abgeleitet werden, die jedem Grauskalenwert entsprechen, und
e) einer Vorrichtung zum Zuordnen der abgeleiteten Farbton-, Sättigungs- und Helligkeitswerte zu den Bildelementen, die den Masken entsprechen.

17. System zum Kolorieren eines monochromen Bildes gemäß Anspruch 16, das des weiteren aufweist:
a) eine Vorrichtung zum digitalen Speichern des Bildes als eine Vielfachheit von Bildpunkten, die jeweils durch einen spezifischen Grauskalenwert repräsentiert werden;
b) eine Vorrichtung zum Speichern der Werte einer separaten Farbübertragungsfunktion für jedes der Gebiete; und
c) Vorrichtung zum digitalen Speichern für jeden Bildpunkt eines Gebietsidentifikators, durch den eine der Farbübertragungsfunktionen mit dem Bildpunkt assoziiert wird.

18. System gemäß Anspruch 17, wobei a) und c) Teile einer Multibitspeicherstruktur sind, die eine erste Speicherstruktur und eine zweite Speicherstruktur aufweist.

19. System gemäß Anspruch 18, wobei für jeden Bildpunkt des Bildes die erste Speicherstruktur einen 8-Bit-Grauskalenwert und die zweite Speicherstruktur einen 4-Bit-Regionbezeichnungswert enthält.

20. System gemäß Anspruch 17, das des weiteren eine zusätzliche Speicherstruktur aufweist, die angepaßt, um Bildpunktidentifikationsinformation zu enthalten, die bestimmt, welche Bildpunkte mit einer bestimmten Region identifiziert werden.

21. System gemäß Anspruch 17, wobei a) und c) von Anspruch 17 Teile einer Multibitspeicherstruktur sind, die für jeden Bildpunkt eine erste Speicherstruktur, die eine 8-Bit-Grauskalenwert enthält, und eine zweite Speicherstruktur, die einen 4-Bit-Gebietsidentifikatorwert enthält, aufweist; und wobei das System weiterhin eine zusätzliche 1-Bit-Speicherstruktur aufweist, die angepaßt ist, um für jeden Bildpunkt Bildidentifikationsinformation zu enthalten, die bezeichnet, welche Bildpunkte mit welchem bestimmten Gebiet identifiziert werden.

22. Bei einem Verfahren zum selektiven Kolorieren von wenigstens einem Bildelement eines Bildes, das zu einer Reihe von Bildern gehört, wobei das Bild eine Vielfachheit von Bildelementen, die Methode zur Durchführung der Kombination von Bildinformationen von masken-definierten Gebieten des Bildes mit Farbinformationen gemäß Anspruch 1 und folgendes aufweist:
a) Zuordnen masken-definierter Gebietsinformationen und Farbinformationen von einem vorherigen Bild zu einem zu kolorierenden Bild;
b) Verschieben von wenigstens einem der masken-definierten Gebiete, um eine vorherbestimmte Entfernung entlang einer vorherbestimmten Achse zu einer bewegten Position und Speichern der masken-definierten Gebietsinformationen für die zu kolorierenden Bilder bei der bewegten Position.

23. Verfahren von Anspruch 22, wobei wenigstens eine der masken-definierten Gebiete aus allen masken-definierten Gebiete des vorherigen Bildes besteht.

24. Verfahren gemäß Anspruch 23, das des weiteren den Schritt des Zuordnens der Bildpunkte umfaßt, die innerhalb eines masken-definierten Gebiets des vorherigen Bildes liegen und nicht innerhalb eines entsprechenden bewegten masken-definierten Gebiets sind, zu einem zusätzlichen maskendefinierten Gebiet.

## Revendications

1. Procédé de renforcement des couleurs d'une image, comportant les étapes consistant à:
a) saisir numériquement l'image sous la forme d'une série d'éléments d'image présentant chacun une valeur d'échelle de gris représentant leur brillance;
b) définir un ou plusieurs masques comportant chacun une ou plusieurs régions fermées d'éléments d'image, représentatives d'un ou de plusieurs objets perçus par l'opérateur et situés dans l'image en présentant la même teinte définie par l'opérateur;
c) sur base du modèle HLS de teinte, luminance et saturation, définir une fonction de transfert de couleur pour chacun desdits masques identifiant chacune desdites valeurs d'échelle de gris d'éléments d'image de chacun desdits masques, avec une combinaison unique de valeurs de teinte, de luminance et de saturation, par les étapes consistant à:
1. choisir une valeur de teinte, définie arbitrairement par l'opérateur, destinée à être appliquée aux éléments d'image correspondant à chacun desdits masques, ladite valeur de teinte correspondant à un plan de déplacement angulaire particulier autour de l'axe de luminance du modèle HLS,
2. choisir une plage de valeurs de luminance représentatives de la brillance desdits éléments d'image correspondant à chacun desdits masques, en étendant le long de l'axe de luminance une région correspondante dudit plan,
3. choisir une plage de valeurs de saturation représentatives des saturations des éléments d'image correspondant à chacun desdits masques, en choisissant une plage correspondante de distances à partir de l'axe de luminance, et
4. construire une fonction prédéterminée de transfert de couleur reliant ladite plage de valeurs de luminance à ladite plage de valeurs de saturation pour chacun desdits masques, en étendant un segment de ligne parallèlement à l'axe de luminance, dans ledit plan, à l'intérieur de ladite région et à l'intérieur de ladite plage de distances;
d) pour chacun desdits masques, appliquer ladite fonction de transfert de couleur auxdites valeurs correspondantes d'échelle de gris des éléments d'image, pour ainsi dériver des combinaisons uniques de valeurs de teinte, de saturation et de luminance correspondant à chaque valeur d'échelle de gris; et
e) attribuer lesdites valeurs dérivées de teintes, de saturation et de luminance auxdits éléments d'image correspondant à chacun desdits masques.

2. Procédé selon la revendication 1, dans lequel, avant l'étape d), lesdites valeurs d'échelle de gris des éléments d'image sont modifiées en allongeant l'échelle de gris.

3. Procédé selon la revendication 1, dans lequel, avant l'étape d), lesdites valeurs d'échelle de gris d'éléments d'image sont modifiées en comprimant l'échelle de gris.

4. Procédé selon la revendication 1, dans lequel, avant l'étape d), lesdites valeurs d'échelle de gris des éléments d'image sont modifiées en déplaçant l'échelle de gris.

5. Procédé selon la revendication 1, dans lequel l'étape a) comporte en outre:
la sélection d'une première valeur arbitraire de teinte représentative de la teinte, désignée par l'opérateur, des objets;
sélection d'une seconde valeur arbitraire de teinte, représentative de la teinte, désignée par l'opérateur, d'une source d'illumination; et
dans laquelle ladite étape d) comporte en outre la construction d'une fonction de transfert prédéterminée de teinte-luminance-saturation, qui relie lesdites plages de valeurs de saturation et de luminance à ladite première et à ladite seconde valeur de teinte.

6. Procédé selon la revendication 1, dans lequel l'étape c) comporte en outre les étapes consistant à:
a. choisir une valeur de luminance représentative de la brillance moyenne des éléments d'image correspondants audit masque;
b. choisir une plage de valeurs de teinte représentative des teintes desdits éléments d'image correspondant audit masque;
c. choisir une plage de valeurs de saturation représentative des saturations correspondant audit masque;
d. construire une fonction prédéterminée de transfert teinte-saturation reliant ladite plage de valeurs de teinte et ladite plage de valeurs de saturation.

7. Procédé selon la revendication 1, étape b), dans lequel au moins une desdites régions est définie par les étapes consistant à:
a. choisir une valeur de seuil supérieur ou du seuil inférieur d'échelle de gris, représentative du bord d'un groupe continu d'éléments d'image présentant une brillance commune;
b. analyser les éléments d'image dans une région prédéterminée (pointe de pinceau) de ladite image saisie, pour déterminer leur brillance médiane, et
c. si la brillance médiane des éléments d'image situés à l'intérieur de ladite région prédéterminée est supérieure audit seuil inférieur ou inférieure audit seuil supérieur, désigner lesdits éléments d'image comme étant inclus dans ladite région.

8. Procédé selon la revendication 7, dans lequel ladite région prédéfinie (pointe de pinceau) est une matrice carrée de dimensions prédéterminées.

9. Procédé selon la revendication 7, dans lequel ladite région prédéfinie (pointe de pinceau) est une matrice circulaire de dimensions prédéterminées.

10. Procédé selon la revendication 1, dans lequel au moins une desdites régions d'échelle de gris est définie en désignant manuellement les frontières d'une ou de plusieurs régions en utilisant un dispositif de pointage pour créer un masque.

11. Procédé de renforcement des couleurs d'une série de structures d'images, comportant les étapes consistant à:
a) saisir et enregistrer numériquement chaque structure d'image sous la forme d'une série d'éléments d'image présentant chacun une valeur d'échelle de gris représentant sa brillance;
b) désigner de manière interactive une desdites structures saisies comme structure de référence;
c) à l'aide de ladite structure de référence, définir de manière interactive une ou plusieurs cartes comportant chacune une ou plusieurs régions fermées d'éléments d'image représentant un ou plusieurs objets désignés comme ayant la même teinte;
d) pour au moins un desdits masques, définir une fonction de transfert de couleur identifiant lesdites valeurs d'échelle de gris des éléments d'image par des combinaisons uniques de valeurs de teinte, de luminance et de saturation, selon le procédé de la revendication 1;
e) corréler lesdites valeurs d'échelle de gris des éléments d'image avec ladite fonction de transfert de couleur, pour ainsi dériver des valeurs uniques de teinte, de saturation et de luminance correspondant à chaque valeur d'échelle de gris, et
f) attribuer lesdites valeurs de teinte, de saturation et de luminance auxdits éléments d'image comportant ledit masque;
g) enregistrer ledit masque en association avec ladite structure de référence;
h) rappeler successivement lesdites structures d'image enregistrées, et pour chaque structure:
i) comparer ladite structure rappelée à la structure précédente, pour déterminer des différences dans les emplacements desdits objets;
j) établir un masque modifié en modifiant une copie de chacun desdits masques par effacement sélectif d'éléments d'images qui ne définissent plus lesdits objets, et addition d'éléments d'image qui définissent lesdits objets, en accord avec lesdites différences déterminées dans les emplacements desdits objets; et
k) enregistrer lesdits masques modifiés en association avec lesdites structures rappelées.

12. Procédé selon la revendication 1, dans lequel l'étape d) comporte en outre les étapes consistant à:
a) déterminer si ladite valeur unique de saturation qui correspond à ladite valeur d'échelle de gris d'éléments d'image est située au-delà d'une valeur limite de saturation maximale qui approche la valeur maximale de saturation visuellement perceptible de ladite valeur unique de luminance qui correspond à ladite valeur d'échelle de gris d'éléments d'image; et
b) attribuer ladite valeur maximale de saturation comme nouvelle valeur de saturation dudit élément d'image si ladite valeur unique de saturation est située au-delà de la valeur maximale de saturation desdites valeurs uniques de luminance qui correspondent à ladite valeur d'échelle de gris de l'élément d'image.

13. Procédé selon la revendication 12, dans lequel lesdites valeurs maximales de saturation de toutes les valeurs uniques de luminance définissent une frontière d'un espace en double cône dans un système de coordonnées de teinte, luminance et saturation (HLS).

14. Procédé selon la revendication 13, dans lequel ledit espace en double cône est symétrique par rapport à un point central situé à mi-chemin entre une valeur maximale unique de luminance et une valeur minimale unique de luminance.

15. Procédé selon la revendication 14, dans lequel ledit espace en double cône est asymétrique par rapport audit point central.

16. Système de renforcement des couleurs d'une image, comportant:
a) un moyen de saisie numérique de l'image sous la forme d'une série d'éléments d'image, présentant chacun une valeur d'échelle de gris représentative de sa brillance;
b) un moyen pour définir un ou plusieurs masques comportant chacun une ou plusieurs régions fermées d'éléments d'image représentative d'un ou de plusieurs objets perçus par l'opérateur et situés à l'intérieur de l'image en présentant une teinte similaire, désignée par l'opérateur;
c) un moyen pour définir une fonction de transfert de couleur pour chacune desdites valeurs d'échelle de gris des éléments d'image identifiant ledit masque, à l'intérieur de chacun desdits masques, et comportant des combinaisons uniques de valeurs de teinte, de luminance et de saturation, selon le procédé de la revendication 1;
d) un moyen pour appliquer ladite fonction de transfert de couleur auxdites valeurs d'échelle de gris des éléments d'image, pour ainsi dériver des valeurs uniques de teinte, de saturation et de luminance correspondant à chaque valeur d'échelle de gris, et
e) un moyen pour attribuer lesdites valeurs dérivées de teinte, de saturation et de luminance auxdits éléments d'image correspondant auxdits masques.

17. Système de coloration d'une image monochrome selon la revendication 16, comportant en outre;
a) un moyen pour enregistrer numériquement ladite image sous la forme de plusieurs pixels représentés chacun par une valeur spécifique d'échelle de gris;
b) un moyen pour enregistrer les valeurs d'une fonction distincte de transfert de couleurs pour chacune desdites régions; et
c) un moyen pour enregistrer numériquement, pour chaque pixel, un marqueur de région, par lequel une desdites fonctions de transfert de couleur est associée audit pixel.

18. Système selon la revendication 17, dans lequel a) et c) font partie d'une structure de mémoire multi-bits comportant une première structure de mémoire et une seconde structure de mémoire.

19. Système selon la revendication 18, dans lequel, pour chaque pixel de ladite image, ladite première structure de mémoire contient une valeur d'échelle de gris à 8 bits et ladite seconde structure de mémoire contient une valeur de marqueur de région à 4 bits.

20. Système selon la revendication 17, comportant en outre une structure supplémentaire de mémoire adaptée pour contenir des informations d'identification de pixel, indiquant quels pixels sont identifiés à une région particulière.

21. Système selon la revendication 17, dans lequel a) et c) de la revendication 17 font partie d'une structure de mémoire multi-bits comportant, pour chaque pixel, une première structure de mémoire contenant une valeur d'échelle de gris à 8 bits et une seconde structure de mémoire contenant une valeur de marqueur de région à 4 bits; et le système comporte en outre une structure supplémentaire de mémoire à un bit, adaptée pour contenir pour chaque pixel une information d'identification de pixel indiquant quels pixels sont identifiés à une région particulière.

22. Dans un procédé de coloration sélective d'au moins un élément d'image d'une image appartenant à une série d'images, ladite image comportant plusieurs éléments d'image, le procédé effectuant la combinaison d'une information d'image provenant de régions de l'image définies par des masques avec des informations de couleur selon la revendication 1, et consistant à:
a) attribuer à une image à colorer une information sur une région définissant un masque et une information de couleur provenant d'une image précédente;
b) déplacer au moins une des régions définies par un masque d'une distance prédéterminée sur un axe prédéterminé, vers un emplacement déplacé, et enregistrer l'information sur une région définissant un masque de ladite image à colorer dans l'emplacement déplacé.

23. Procédé selon la revendication 22, dans lequel ladite région définie par un masque au moins présenté est constituée de toutes les régions définies par un masque dans ladite image précédente.

24. Procédé selon la revendication 23, comportant l'étape ultérieure d'attribuer à une région supplémentaire définie par un masque les pixels qui sont situés à l'intérieur d'une région définie par un masque de l'image précédente et qui ne sont pas situés dans une région définie par un masque et déplacée de manière correspondante.
